(19)

Europäisches Patentamt
European Patent Office
Office européen des brevets

(11) **EP 2 150 400 B1**

(12) **EUROPEAN PATENT SPECIFICATION**

(45) Date of publication and mention of the grant of the patent:
**22.02.2012 Bulletin 2012/08**

(21) Application number: **07734377.0**

(22) Date of filing: **23.04.2007**

(51) Int Cl.:
***B29D 30/16*** *(2006.01)*     ***B29D 30/30*** *(2006.01)*

(86) International application number:
**PCT/IB2007/001059**

(87) International publication number:
**WO 2008/129341 (30.10.2008 Gazette 2008/44)**

(54) **Method for laying down at least an elastic element in a process for producing tyres for vehicles, process for producing tyres for vehicles and apparatus for laying down at least one elastic element**

Verfahren zum Aufbringen mindestens eines elastischen Elements in einem Verfahren zur Herstellung von Reifen für Fahrzeuge, Verfahren zur Herstellung von Reifen für Fahrzeuge und Vorrichtung zum Aufbringen mindestens eines elastischen Elements

Procédé pour poser au moins un élément élastique dans un processus de confection de pneus pour véhicule, processus de confection de pneus pour véhicule et appareil pour poser au moins un élément élastique

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**10.02.2010 Bulletin 2010/06**

(73) Proprietor: **Pirelli Tyre S.P.A.**
**20126 Milan (IT)**

(72) Inventors:
• **DALE', Pietro**
**20126 Milano (IT)**

• **VERGANI, Alessandro**
**20126 Milano (IT)**

(74) Representative: **Baroni, Matteo et al**
**Bugnion S.p.A.**
**Viale Lancetti, 17**
**20158 Milano (IT)**

(56) References cited:
**EP-A- 0 344 928     WO-A-91/13195**
**WO-A-92/10419     DE-A1- 10 347 327**
**JP-A- 2006 069 085     US-A1- 2001 008 158**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention in a first aspect relates to a method of laying down at least one elastic element in a process for producing tyres for vehicles.

The invention in a different aspect also relates to a process for producing tyres for vehicles and, in a further aspect, relates to an apparatus for laying down at least one elastic element in a process for producing tyres for vehicles.

Herein and in the following of the present specification and the appended claims, by laying profile of an elastic element it is intended the tension of said elastic element as a function of time during application of said elastic element onto a forming drum.

In addition, by "elastic element" it is intended a continuous thread element having at least one cord (assembly of one or more filament-like elements or strands) of textile or metallic material covered with elastomeric material.

A tyre for vehicles generally comprises a carcass structure provided with at least one carcass ply having respectively opposite end flaps in engagement with respective annular anchoring structures, integrated into the regions usually identified with the name of "beads", showing an inner diameter substantially corresponding to a so-called "fitting diameter" of the tyre onto a respective mounting rim.

Associated with the carcass structure is a belt structure comprising one or more belt layers, located in radial superposed relationship with respect to each other and to the carcass ply.

Each belt layer can have textile or metallic reinforcing cords with a crossed orientation and/or substantially parallel to the circumferential extension direction of the tyre (zero-degree layer).

Applied at a radially external position to the belt structure is a tread band, also of elastomeric material like other semi-finished products constituting the tyre.

Respective sidewalls of elastomeric material are further applied at an axially external position, to the side surfaces of the carcass structure, each extending from one of the side edges of the tread band until close to the respective annular anchoring structure to the beads.

In tyres of the tubeless type, an airtight coating layer, usually referred to as "liner" covers the inner surfaces of the tyre.

The carcass structure and belt structure are generally made separately of each other in respective work stations, to be mutually assembled at a later time.

In more detail, manufacture of the carcass structure first contemplates application of the carcass ply or plies onto a building drum, to form a so-called "carcass sleeve" of substantially cylindrical shape.

The annular anchoring structures to the beads are formed on the opposite end flaps of the carcass ply that are subsequently turned up around the annular structures themselves so as to enclose them in a sort of loop.

A so-called "outer sleeve" is made on a second or auxiliary drum, which outer sleeve comprises the belt layers applied in mutually radially superposed relationship, and optionally the tread band applied to the belt layers at a radially external position.

As described above, the outer sleeve can further comprise a zero-degree belt layer that is obtained by means of said elastic element.

More specifically, to make the zero-degree belt layer, the elastic element is wound up on the auxiliary drum in the form of circumferential coils suitably distributed in an axial direction; due to the conformation of the auxiliary drum, this belt layer is given the desired geometric profile.. Correct maintenance of the geometric features of this profile is indispensable for proper working of the whole tyre.

The outer sleeve is then picked up from the auxiliary drum to be coupled to the carcass sleeve.

WO 9113195 discloses that in the manufacture of reinforced composites having reinforcing filaments within a matrix, a filament consisting of a staple yarn spun from discontinuous fibres with low twist is subject to controlled stretching to vary the weight per unit length of the yarn along the length of the yarn. An apparatus for performing the stretching operation comprises two roll pairs spaced apart along the yarn feed path and rotated at controlled relative speeds to obtain the desired elongation of the yarn. The yarn may be used directly in producing a composite e.g. by applying resin to the yarn and winding it onto a mandrel or former, or it may be used to prepare a preform, prepeg tape, woven fabric or the like to be used in the production of a shaped composite.

WO 9210419 discloses a method and an apparatus provided to calculate and control the elongation in a running web, e.g. in connection with a preparation of a web in a printing machine. In connection with at least an increase or decrease in the web tension, the length change in a reference length of the web material is measured, and by means of web tension meters the web tension before and after the web tension change or each one of the web tension alterations is determined. The tension-free length of the reference length is also calculated and if it is needed, the elongation of the web is corrected through an increase or a decrease in the web tension depending on said measurements.

DE 103 47 327 discloses a method for the production of a breaker belt bandage of a pneumatic vehicle tyre by helically winding at least one continuously conveyed strip, having at least one reinforcing element, onto a belt package of a pneumatic vehicle tyre which has been built up on a building drum, wherein the outside diameter of the building drum is changed in dependence on the position of the strip or the strips during the winding operation.

EP 0344928 discloses a winding tension controlling apparatus which controls tensile force to be applied to a tire constituting member wound about a building drum. The apparatus comprises a memory device for storing patterns of tensile forces, a detecting sensor for always detecting winding positions of the tire member, and a processing unit for obtaining a tensile force value from a pattern of tensile force received on the basis of the memory device and a detected result from the memory device and outputting the tensile force value as a control signal.

US 2001008158 discloses a pneumatic radial tire and a method for manufacturing the same, a device for forming a band of radial tire, and a method of and device for forming a belt-band-tread rubber assembly. The pneumatic tire including a belt arranged on the radially outer side or a carcass, and a band arranged on the radially outer side of the belt and composed of continuous one to several organic fiber cords wound spirally and approximately parallel to the circumferential direction of the tire. The radial tire manufacturing method including the steps of laminating the predetermined number of belt plies on a belt drum or belt ring for forming a belt, and winding one to several organic fiber cords continuously and spirally in the circumferential direction of the belt on the outer surface of the formed belt in order to form a band. The band forming device including a means for drawing out a cord to be wound, a means for traversing the letting-off means in the widthwise direction of the belt, and a means for controlling the traverse of the letting-off means. The method of forming belt-band-tread rubber assemblies comprising a step of expanding the diameter of belt drum so that the shape in axial section of belt drum becomes the same or approximately the same as the finished shape of the band in vulcanization mold. The assembly forming device including a diameter-variable belt drum comprising a stretchable forming annular body made of an elastomer, and a means for expanding and contracting the diameter of the annular body, wherein the shape in axial section of the circumferential surface of the annular body in the diameter.

JP 2006069085 discloses a method and apparatus for controlling tension of rubber belt. Since a dancer roller is pressed to the rubber belt with constant pressing force by an air cylinder to bend the rubber belt in the shape of a dog leg, when the tension of the rubber belt is changed, the dancer roller is largely displaced approximately perpendicularly to the traveling direction of the rubber belt. As a result, when the tension of the rubber belt exceeds a set value, the situation is detected exactly by a detection sensor, and a feeding speed from a feeder is changed by a control means to return the tension within a set value range surely without breaking the rubber belt or changing the cross-sectional area of the rubber belt.

US 2003/0213863 discloses a method and an apparatus for applying a cord onto a drum driven in rotation during manufacture of articles reinforced by cords, such as tyres for example. In more detail, the described method and apparatus enable instantaneous measurement of the properties of the cord while the latter is being supplied to the drum.

A magnitude of specific interest appears to be the length of the cord that is wound on the drum; for this reason, the described structure is mainly intended for calculation of the "effective pitch line differential (EPLD)", i.e. the radial distance between the drum surface and the neutral bending plane of the cord wound up on the drum itself.

To carry out this measurement, the apparatus described in US 2003/0213863 has a plurality of capstans and transmission rollers guiding the cord from the roller on which it is firstly wound, to the drum. In more detail, the path of travel of the cord is divided into three sections, in each of which the cord has a different tension.

A first section is defined between the drum and a first capstan; a second section is defined between the first capstan and a second capstan; a third section is defined between the second capstan and the roller on which the cord is firstly wound. The second capstan is a device for control of the cord tension through which tension between the third and second section of the path of travel is varied.

Tension variation from the third to the second section takes place when, during operation of the apparatus, the cord speed in the second section is variable; this variable speed of the cord is determined by the speed required for the cord by the first capstan (the closest to the drum on which the cord is to be wound).

The cord tension in the second section is measured by a tension sensor, through which the speed of the second capstan relative to the speed of the first capstan is controlled, to compensate for each variation in the length of the second section and maintain tension in the second section to a desired value.

The control system of the motor driving the second capstan in rotation can use, as feedback, the tension supplied by said tension sensor as well as position and rotation data coming from an encoder associated with the first capstan.

The first capstan is disposed is such a manner as to enable control of the length of the cord that is supplied to the drum, rather than the cord tension.

Tension of the cord wound on the drum is controlled through a radially expandable diaphragm mounted on the radially external surface of the drum itself.

Rotation of the drum and the first capstan is measured by respective encoders; a control system adjusts the rotation speed and angular acceleration of said drum and said first capstan, so that they are moved relative to each other according to a predetermined algorithm.

The Applicant has verified that an apparatus of the type disclosed in US 2003/0213863 does not allow a laying profile of an elastic element on a forming drum to be followed in a precise manner according to the design specifications, for instance during the transients of a winding step of said elastic element or

concurrently with unexpected events upstream of the laying region of the elastic element itself.

Since the state of tension in the cord or cords included in the elastic element is critical for maintaining the planned tyre performance, the Applicant has found the possibility of controlling said laying profile of an elastic element, in particular during formation of a zero-degree layer in the manufacture of a belt structure.

Therefore, in accordance with the present invention, the Applicant has faced up to the problem of controlling the tension that an elastic element, necessary for formation of a tyre component under processing, has at a surface thereof to be laid down on a forming drum for manufacture of said component.

In accordance with the present invention, the Applicant has found that, by adjusting the rotation speed of a control roller on which the elastic element is engaged, as a function of the rotation speed of the forming drum and the percent elongation to be imparted to the elastic element itself, it is possible to control the laying profile of the elastic element in a very precise and reliable manner, in strict observance of the design specifications.

More particularly, in a first aspect the present invention relates to a method of laying down at least one elastic element in a process for producing tyres for vehicles, said method comprising the following steps:

- determining a first parameter representative of a laying speed at which at least one elastic element is laid down around a tyre forming drum;
- determining a second parameter representative of a percent elongation to be applied to said elastic element;
- adjusting as a function of said first and second parameters, a rotation speed of a control roller positioned upstream of said forming drum and having a radially external surface at least partly in engagement with said elastic element, to control the laying profile of said at least one elastic element.

The Applicant has verified that taking into consideration both the rotation speed of the forming drum and the percent elongation to be imparted to the elastic element before winding up of the latter on said drum, the elastic element is given the desired tension instant by instant.

Advantageously, accuracy of the tension values in time during laying of the elastic element is also maintained if the tyre production process is carried out at different laying speeds.

Accuracy in the tension control of the elastic element is also advantageously maintained during the starting and final transients of the rotation movements of the forming drum.

More specifically, the Applicant has verified that the method of the invention allows the difference between the theoretical laying profile and real laying profile of an elastic element on a forming drum to be minimised, in particular in the starting and/or final transients.

The Applicant has in fact ascertained that the equations describing the behaviour of an elastic body under static conditions (i.e. when the elastic body itself is stationary), can remain valid under dynamic conditions too, provided the characteristic motion parameters of the body are taken into consideration in a suitable manner.

Under dynamic conditions, the elastic element to be laid down on the auxiliary drum is not stationary, but -it goes on sliding and "renewing" during transfer from the feeding roller on which it is firstly wound to the forming drum.

By introducing said powered roller between the feeding roller and auxiliary drum, tension of the elastic element on the laying surface is adjusted instant by instant.

The Applicant has therefore verified that it is possible to adjust the tension of the elastic element by modifying the percent elongation of said element instant by instant, through suitable adjustment of the relative speeds of the forming drum and the control roller.

In a further aspect, the present invention relates to a process for producing tyres for vehicles, comprising the following steps:

- manufacturing a carcass structure;
- associating said carcass structure with a belt structure;
- associating a tread band with said belt structure, at a radially external position;

wherein any of said steps comprises:

- laying down at least one elastic element at a position radially external to a forming drum by carrying out the method according to anyone of claims 1 to 9.

In another aspect, the present invention relates to an apparatus for laying down at least one elastic element in a process for producing tyres for vehicles, said apparatus comprising:

- a first processing module for determining a first parameter representative of a laying speed at which at least one elastic element is laid down around a forming drum;

- a second processing module to determine a second parameter representative of a percent elongation to be applied to said elastic element;
- a control roller positioned upstream of said forming drum and having a radially external surface at least partly in engagement with said elastic element;
- an adjusting module operatively associated with said control roller for adjusting, as a function of said first and second parameters, a rotation speed of said control roller for controlling the laying profile of said at least one elastic element.

Particular embodiments of the invention are the subject of the respective dependent claims.

The present invention, in at least one of said aspects, can have one or more of the preferred features that are hereinafter described.

Preferably, the second parameter representative of the percent elongation to which the elastic element is to be submitted, is calculated as a function of a tension that is to be applied to the elastic element itself.

Preferably, the laying speed of the elastic element, that can be defined by the rotation speed of the forming drum, is detected in real time, to calculate the corresponding rotation speed of the control roller instant by instant.

In this way the system can be made still more precise and reliable, since the rotation speed of the control roller is determined as a function of the true rotation speed of the forming drum; in other words, the difference between the two rotation speeds which in turn determines the percent elongation and therefore the tension of the elastic element, is calculated starting from the real operation conditions of the system.

Preferably, the elastic element is laid down around the forming drum to make a zero-degree reinforcing layer of the belt structure.

In this instance, the operation of laying down the elastic element is referred to as "spiralling", and the first parameter used in the control method is exactly representative of the so-called spiralling speed.

In this case, the forming drum can be an auxiliary drum, in a process in which the carcass structure and belt structure are made separately, on a main drum and an auxiliary drum respectively.

Advantageously, provision of a further feedback control is made possible on the elastic-element tension between the control roller and forming drum.

In particular, tension of the elastic element is detected downstream of the control roller; the detected tension is then compared with a pre-set value, representative of the tension to which the elastic element must be submitted at that given instant. Depending on the possible difference between the detected tension and the pre-set value, a further adjustment is carried out on the rotation speed of the control roller.

Further features and advantages will become more apparent from the detailed description of a preferred, but not exclusive, embodiment of a method of laying down at least one elastic element in a process for producing tyres for vehicles, a process for producing tyres for vehicles and an apparatus for carrying out said laying method, in accordance with the present invention.

This description will be set out hereinafter with reference to the accompanying drawings, given by way of non-limiting example, in which:

- Fig. 1 shows a diametrical half-section of a tyre made in accordance with the production process of the invention;
- Fig. 2 diagrammatically shows a structure utilised for carrying out the control method in accordance with the invention;

- Fig. 3 shows a block diagram of a control apparatus in accordance with the present invention;
- Fig. 4 shows a graph representative of a comparison between a theoretical time course and the corresponding practically-obtained time course of a laying profile of an elastic element during laying of same in accordance with the method of the invention.

With reference to the drawings, a generic tyre for the manufacture of which the control method and process in accordance with the invention can be utilised has been generally identified with 1.

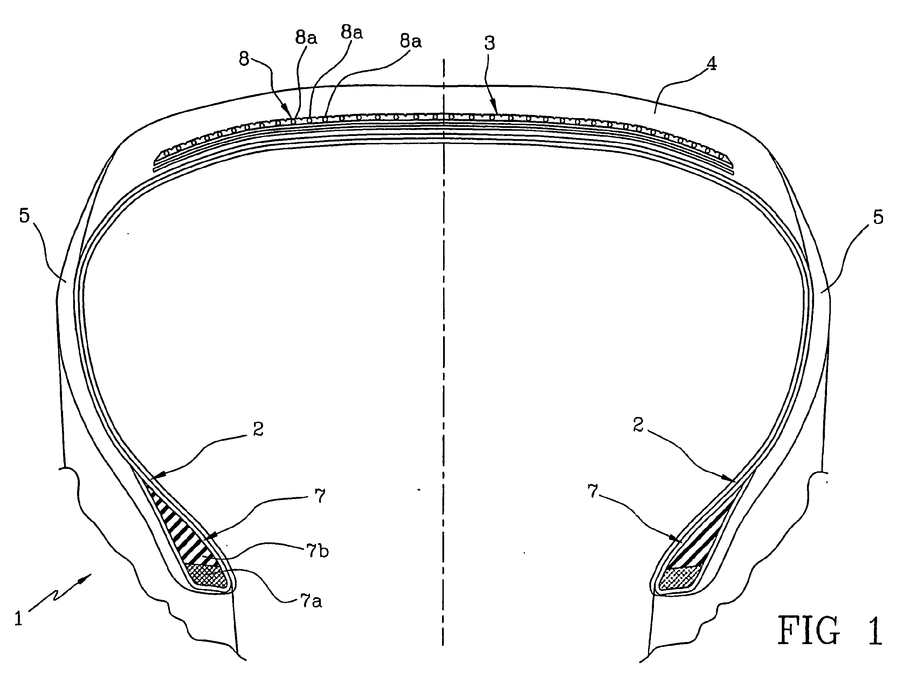

For producing tyre 1 (Fig. 1), a carcass structure 2 and a belt structure 3 that are suitably associated with each other are generally provided. In addition, a tread band 4 is associated externally of said belt structure 3.

At the radially internal ends of the carcass structure 2 the so-called beads 7 are made, inside which at least one "bead core" 7a is provided, possibly associated with a filling insert 7b.

Applied to the side surfaces of the carcass structure 2 are sidewalls 5 of elastomeric material; each sidewall 5 extends from one of the side edges of the tread band 4 to a corresponding bead 7.

It will be recognised that the radially external end of each sidewall 5 can be interposed between the edge of the tread band 4 and the carcass ply 6 (according to a configuration of the "underlying sidewalls" type); alternatively, the edge of the tread band 4 can be interposed between this radially external end of each sidewall 5 and the carcass ply 6 (according to a configuration of the "overlying sidewalls" type, diagrammatically shown in Fig. 1).

The carcass structure 2 and belt structure 3 can be made on distinct drums, referred to as main drum and auxiliary drum, respectively.

Assembling between the carcass structure 2 and belt structure 3 can take place directly on the main drum, or on a so-called "shaping drum", on which the carcass structure 2 is placed, from the main drum, at the end of manufacture of said carcass structure 2.

Alternatively, tyre 1 can be manufactured on a single drum, by a technique according to which the different tyre elements are manufactured through laying of strip-like elements or elongated elements of elastomeric material, at a radially external position relative to a drum having a substantially toroidal conformation.

The alternative manufacturing technique briefly summarised hereinabove is described in patents EP 0928680 B1 and EP 0928702 B1 in the name of the same Applicant, for example.

The above described steps may each comprise a sub-step in which at least one elastic element 8 is laid down at a radially external position to a forming drum 50.

This forming drum 50 can be both the main drum and the auxiliary drum (in which case the carcass structure 2 and belt structure 3 are made on distinct drums), or the shaping drum on which carcass structure 2 and belt structure 3 are assembled, should this drum be used.

The forming drum 50 can also be the single drum used in the manufacturing technique described in the above mentioned patents EP 0928680 B1 and EP 0928702 B1.

Preferably, laying of the elastic element 8 is part of the step of making the belt structure 3; in particular, the elastic element 8 is laid down at a radially external position around said forming drum 50 in the so-called zero-degree spiralling step.

Preferably, the elastic element 8 comprises one or more nylon threads, externally covered with a layer of elastomeric material.

In a particular embodiment in accordance with the invention, the elastic element 8 is wound up around the forming drum 50 on the latter when at least two strips of the belt structure 3 of tyre 1 under processing have already been provided.

In fact, the elastic element 8 can comprise reinforcing cords 8a of the belt structure 3. These cords 8a are laid in an orientation substantially parallel to the circumferential extension direction of tyre 1.

In addition or alternatively, the elastic element 8 may comprise, by way of example only, filament-like elements used for making the so-called bead cores 7a, reinforcing inserts integrated into the beads 7, reinforcing inserts applied under the opposite edges of the belt structure 3 (consisting of one or more threads wound up around the rotation axis of the forming drum 50), and the like.

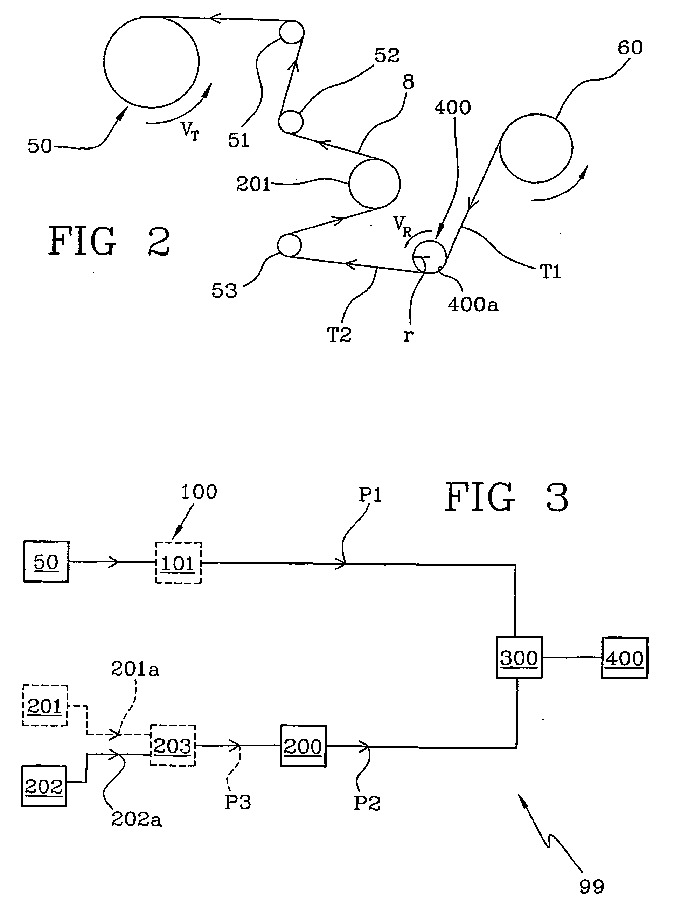

In more detail, the elastic element 8 is firstly wound up on a roller 60 (Fig. 2) and therefrom progressively unwound to be laid down around the forming drum 50.

Between roller 60 and forming drum 50 one or more transmission rollers 51, 52, 53 are provided to guide the elastic element 8 along a predetermined trajectory.

Shown in Fig. 2 are only three transmission rollers (denoted at 51, 52 and 53) by way of example; obviously, it is possible to use any number of transmission rollers or other equivalent elements, depending on the path to be followed by the elastic element 8.

A control roller 400 is positioned upstream of the forming drum 50; the control roller has a radially external surface 400a at least partly in engagement with the elastic element 8, so as to be able to adjust tension of same.

It is to be pointed out that a kinematic structure (not shown) can be provided between roller 60 and control roller 40, the function of which is to guide the elastic element 8 in its starting length.

For tension adjustment of the elastic element 8 between control roller 400 and forming drum 50, a first parameter P1 is determined that is representative of a laying speed at which the elastic element 8 is laid down around the forming drum 50.

This laying speed can be the rotation speed of the forming drum 50. Preferably, should the elastic element 8 be used to make a zero-degree layer of the belt structure 3, the laying speed can be defined by the spiralling speed.

In a first embodiment, the laying speed of the elastic element 8 is known a priori and, in order to perform the processing operations hereinafter described, it is fetched from a suitable storage register provided in the control system.

Alternatively, the laying speed can also be detected in real time, through an auxiliary sensor 101 operatively associated with the forming drum 50.

For a particularly accurate and reliable control, both techniques for determining the laying speed can also be simultaneously used.

Then a second parameter P2 is determined which is representative of a percent elongation to apply to the elastic element 8. Preferably, to determine the second parameter P2, a tension 202a which must be applied to the elastic element 8 is first determined; then the second parameter P2 is calculated as a function of this tension 202a.

More particularly, the rotation speed of the control roller 400 is calculated in proportion to the first parameter P1, based on a predetermined coefficient; the latter is a function of said second parameter P2.

Finally, depending on the first and second parameters P1, P2, the rotation speed of the control roller 400 is adjusted.

Practically, through the above described method, relations describing the deformation of an elastic body under static conditions are applied under dynamic conditions, clearly taking into account the fact that the body (i.e. the elastic element 8) is moving.

In more detail, under static conditions the equations describing the behaviour of an elastic body are the following:

$$(i) \quad \text{Relative elongation} \quad \varepsilon = \frac{L - L_0}{L_0}$$

$$(ii) \quad \text{Tension of the material} \quad \sigma = \frac{F}{A}$$

$$(iii) \quad \text{Hooke's law} \quad \sigma = E \cdot \varepsilon$$

wherein:

F is the external force applied to the elastic body;
$\sigma$ is the body tension;
A is the body section defined in a plane orthogonal to the direction along which force F is applied;
$\varepsilon$ is the relative elongation;
E is the Young's modulus of the material of which the body is made;
$L_0$ is the body length in the absence of external stresses;
L is the body length obtained following the elastic strain caused by force F.

More particularly, the Applicant has found that the balance equation of the forces acting on the elastic element 8 in the length defined between the control roller 400 and forming drum 50, except for negligible contributions due to non-ideality of the system is the following:

$$(iv) \quad T_1 r + T_2 r + C = 0$$

wherein:

$T_1$ is the tension of the elastic element 8 entering the control roller 400;
$T_2$ is the tension of the elastic element going out of the control roller 400;
r is the radius of the control roller 400;
C is the torque of the motor acting on the control roller 400.

The Applicant points out that it is therefore possible to control the material tension downstream of the control roller 400 irrespective of all that is upstream. More specifically, from the above equations it results that the speed of the control roller 400 can be linked to the speed of the forming drum 50 and the percent elongation of the elastic element 8 by the following relation:

$$(v) \quad V_R(t) = V_T(t) \cdot \frac{100}{100 + All\%}$$

wherein:

$V_R(t)$ is the speed of the control roller 400;
$V_T(t)$ is the speed of the forming drum 50;
All% is the percent elongation of the elastic element 8.

Practically, once the desired tension on the laying surface has been defined, it is drawn the elongation to which the elastic element 8 must be correspondingly submitted, and therefrom, through relation (v), the speed to be imposed to the control roller 400 is determined.

It is possible to see that, in the relation (v), $V_T(t)$ represents the first parameter P1, All% represents the second parameter P2, while $V_R(t)$ is the rotation speed of the control roller 400 that is suitably adjusted.

In order to make the control of the invention more accurate and reliable, it is provided a step of detecting tension 201a of the elastic element 8 between the control roller 400 and forming drum 50; the rotation speed of the control roller 400 is therefore adjusted also as a function of this detected tension 201a.

More specifically, the detected tension 201a is compared with a pre-set tension 202a, defined as a function of the laying time, and determined through a suitable calculation algorithm or selected from a pre-stored table of values; depending on this comparison, a third parameter P3 is determined, i.e. the corrective percent elongation that is to be applied to the elastic element 8.

Practically, a subtraction can be performed between the detected tension 201a and the pre-set tension 202a, so that the obtained error signal can be employed for feedback adjustment of the rotation of the control roller 400.

More specifically, the error signal enters a proportional and integral-mode controller by which the third parameter P3 is calculated, which is the corrective percent elongation relative to that calculated in the open-loop mode, i.e. without detecting tension 201a. This third parameter P3 therefore co-operate in forming value P2; consequently, once P1 and P2 have been determined, it is possible to calculate the real speed to be imposed to the control roller 400 instant by instant.

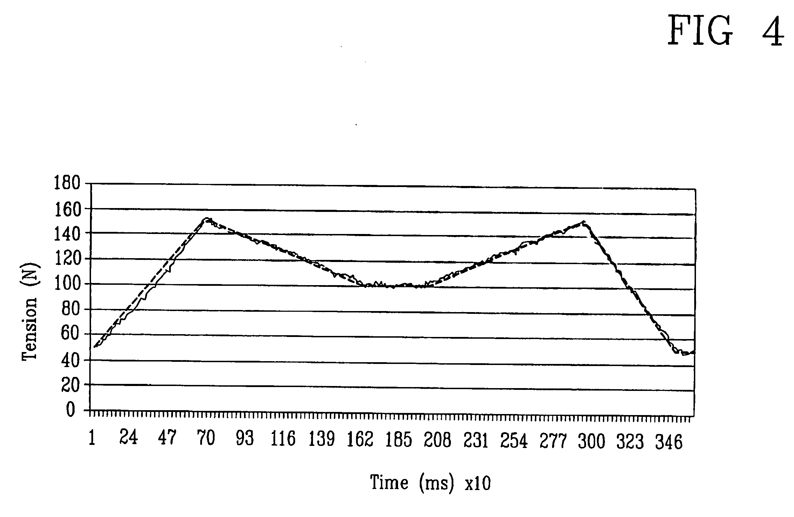

Fig. 4 shows the laying profile of an elastic element 8 as practically obtained (solid line) and as established during the planning step (chain line).

It is to be noted that tension of the elastic element - in this case consisting of a plurality of rubberised nylon threads used for a zero-degree spiralling - follows the ideal theoretical course in a very precise manner.

Fig. 3 shows a block diagram of an apparatus 99 in accordance with the present invention, by means of which it is possible to implement the above described control method.

Apparatus 99 first of all comprises a first processing module 100 to determine said parameter P1; as specified above, the first parameter P1 is representative of the laying speed at which the elastic element 8 is positioned around the forming drum 50.

Preferably, the first parameter P1 is representative of the rotation speed of the forming drum 50; in the particular case in which the elastic element 8 is used for making a zero-degree reinforcing layer, the first parameter P1 is advantageously the spiralling speed at which the elastic element 8 is applied.

The first processing module 100 can be merely provided for selection of the first parameter P1 in a pre-stored table; the laying speed in fact is generally known a priori.

In a preferred embodiment, the first processing module 100 comprises an auxiliary sensor 101 to detect said first parameter P1; in particular, the auxiliary sensor 101 can be adapted to detect the rotation speed of the forming drum 50.

Apparatus 99 further comprises a second processing module 200 to determine the second parameter P2; the latter is representative of the percent elongation All% to be applied to the elastic element 8 and, as described above, can be calculated starting from the tension that must be applied to the elastic element 8 itself.

Apparatus 99 further comprises said control roller 400. The control roller 400 has a radially external surface 400a that is at least partly in engagement with the elastic element 8 so as to control tension of the latter.

Apparatus 99 also comprises an adjusting module 300 operatively associated with the control roller 400 to adjust the rotation speed of the latter, depending on the first and second parameters P1, P2. In particular, the adjusting module 300 determines the rotation speed of the control roller 400 in proportion to the first parameter P1, based on a predetermined coefficient, the latter being preferably a function of the second parameter P2.

In summary, the relation according to which the rotation speed of the control roller 400 is adjusted is the following:

$$V_R(t) = V_T(t) \cdot \frac{100}{100 + All\%}$$

wherein:

- $V_R(t)$ is the speed of the control roller;
- $V_T(t)$ is the rotation speed of the forming drum 50 (first parameter P1);

- All% is the percent elongation to which the elastic element 8 is to be submitted (second parameter P2).

Preferably, apparatus 99 also comprises a main sensor 201 to detect tension 201a of the elastic element 8 between control roller 400 and forming drum 50.

The adjusting module 300 is operatively associated with said main sensor 201, to adjust the rotation speed of the control roller 400 as a function of the detected tension 201a.

More particularly, apparatus 99 can be provided with a comparing module 203, operatively associated with the main sensor 201, to compare the detected tension 201a with a pre-set tension 202a defined as a function of the laying time, the same pre-set tension 202a being preferably determined by a suitable calculation or selection module 202.

The comparing module 203 is also associated with the second processing module 200, so that the third parameter P3, and consequently P2, can be calculated as a function of said comparison. In this way a further feedback control on the tension of the elastic element 8 is obtained.

In fact, this tension has been already set to acceptable values due to adjustment in the open-loop mode, depending on the percent elongation All% and the rotation speed of the control roller 400.

By virtue of the further control on the real tension applied to the elastic element 8, and the comparison with the theoretical value calculated a priori, it is possible to refine the accuracy of the system to a greater extent and make the latter still more reliable.

As above described, in the preferred embodiment the elastic element 8 is used for manufacture of a zero-degree reinforcing layer for the belt structure 3 and is laid down on the forming drum 50 (that in the case in point is an auxiliary drum or a shaping drum) in the so-called spiralling step.

In this particular case, the first parameter P1, i.e. the laying speed of the elastic element 8, can be defined by the spiralling speed.

**Claims**

1. A method of laying down at least one elastic element in a process for producing tyres for vehicles, said method comprising the following steps:

   - determining a first parameter (P1) representative of a laying speed at which at least one elastic element (8) is laid down around a forming drum (50) for a tyre (1);
   - determining a second parameter (P2) representative of a percent elongation to be applied to said elastic element (8);
   - adjusting as a function of said first and second parameters (P1, P2), a rotation speed of a control roller (400) positioned upstream of said forming drum (50) and having a radially external surface (400a) at least partly in engagement with said elastic element (8), to control the laying profile of said at least one elastic element (8).

2. A method as claimed in claim 1, wherein the step of determining said second parameter (P2) comprises the following sub-steps:

   - determining a pre-set tension (202a) to be applied to said elastic element (8), as a function of the laying time:
   - calculating said second parameter (P2) as a function of said pre-set tension (202a).

3. A method as claimed in claim 1 or 2, wherein the rotation speed of said control roller (400) is calculated in proportion to said first parameter (P1), based on a predetermined coefficient.

4. A method as claimed in claim 3, wherein said predetermined coefficient is a function of said second parameter (P2).

5. A method as claimed in anyone of the preceding claims further comprising the following steps:

   - detecting a tension (201a) of said elastic element (8) between said control roller (400) and forming drum (50);
   - adjusting the rotation speed of said control roller (400) also as a function of said detected tension (201a).

6. A method as claimed in claim 5, further comprising the following steps:

   - comparing said detected tension (201a) with a pre-set tension (202a) determined as a function of the laying time;
   - determining a third parameter (P3) as a function of said comparison;
   - determining said second parameter (P2) as a function of said third parameter (P3).

7. A method as claimed in anyone of the preceding claims wherein the step of determining said first parameter (P1) comprises a sub-step of detecting said laying speed.

8. A method as claimed in anyone of the preceding claims wherein said elastic element (8) is laid down around said forming drum (50) during a zero-degree spiralling step.

9. A method as claimed in claim 8, wherein said first parameter (P1) is representative of a spiralling speed at which said elastic element (8) is wound around said forming drum (50).

10. A process for producing tyres for vehicles, comprising at least the steps of:

   - making a carcass structure (2);
   - associating said carcass structure (2) with a belt structure (3) ;
   - associating a tread band (4) with said belt structure (3), at a radially external position; wherein any of said steps comprises:
   - laying down at least one elastic element (8) at a position radially external to a forming drum (50) by carrying out the method according to anyone of claims 1 to 9.

11. A process as claimed in claim 10, wherein during the step of making said belt structure (3), said elastic element (8) is laid down around said forming drum (50).

12. A process as claimed in claim 10 or 11, wherein:

   - said carcass structure (2) is made on a main drum;
   - said belt structure (3) is made on an auxiliary drum defined by said forming drum (50).

13. A process as claimed in claim 10 or 11, wherein said forming drum (50) is a substantially toroidal shaping drum.

14. An apparatus for laying down at least one elastic element in a process for producing tyres for vehicles, said apparatus comprising:

   - a first processing module (100) for determining a first parameter (P1) representative of a laying speed at which at least one elastic element (8) is laid down around a forming drum (50);
   - a second processing module (200) for determining a second parameter (P2) representative of a percent elongation to be applied to said elastic element (8);
   - a control roller (400) positioned upstream of said forming drum (50) and having a radially external surface (400a) at least partly in engagement with said elastic element (8);
   - an adjusting module (300) operatively associated with said control roller (400) for adjusting, as a function of said first and second parameters (P1, P2), a rotation speed of said control roller (400) for controlling the laying profile of said at least one elastic element (8).

15. An apparatus as claimed in claim 14, wherein said second processing module (200) calculates said second parameter (P2) depending on a pre-set tension (202a) to be applied to said elastic element (8), which is defined as a function of the laying time.

16. An apparatus as claimed in claim 14 or 15, wherein said adjusting module (300) determines the rotation speed of said control roller (400) in proportion to said first parameter (P1), based on a predetermined coefficient.

17. An apparatus as claimed in claim 16, wherein said predetermined coefficient is a function of said second parameter (P2).

18. An apparatus as claimed in anyone of claims 14 to 17, further comprising:

   - a main sensor (201) to detect a tension (201a) of said elastic element (8) between said control roller (400) and forming drum (50);
   - said adjusting module (300) being operatively associated with said main sensor (201) for adjusting the rotation speed of said control roller (400) also as a function of said detected tension (201a).

19. An apparatus as claimed in claim 18, further comprising:

- a comparing module (203) operatively associated with said main sensor (201) to compare said detected tension (201a) with a pre-set tension (202a) defined as a function of the laying time and determined by a calculation or selection module (202);
- said second processing module (200) being operatively associated with said comparing module (202) for determining a third parameter (P3) as a function of said comparison;
- said second processing module (200) determining said second parameter (P2) as a function of said third parameter (P3).

20. An apparatus as claimed in anyone of claims 14 to 19, wherein said first processing module (100) comprises an auxiliary sensor (101) for detecting said laying speed.

21. An apparatus as claimed in anyone of claims 14 to 20, wherein said elastic element (8) is laid down around said forming drum (50) in a zero-degree spiralling step.

22. An apparatus as claimed in claim 21 wherein said first parameter (P1) is representative of a spiralling speed at which said elastic element (3) is wound around said forming drum (50).

**Patentansprüche**

1. Verfahren zum Ablegen wenigstens eines elastischen Elements in einem Prozess zum Herstellen von Reifen für Fahrzeuge umfassend die folgenden Schritte:

- Bestimmen eines ersten Parameters (P1), der für eine Ablegegeschwindigkeit repräsentativ ist, mit der wenigstens ein elastisches Element (8) auf einer Formungstrommel (50) für einen Reifen (1) abgelegt wird;
- Bestimmen eines zweiten Parameters (P2), der für eine prozentuale Verlängerung repräsentativ ist, die auf das elastische Element (8) aufgebracht werden soll;
- Einstellen als Funktion des ersten und zweiten Parameters (P1, P2) einer Drehgeschwindigkeit einer Regelungsrolle (400), die der Formungstrommel (50) vorgelagert angeordnet ist und die eine radial äußere Oberfläche (400a) wenigstens teilweise im Eingriff mit dem elastischen Element (8) hat, um das Ablegeprofil des wenigstens einen elastischen Elements (8) zu regeln.

2. Verfahren nach Anspruch 1, bei dem der Schritt des Bestimmens des zweiten Parameters (P2) folgende Unterschritte aufweist:

- Bestimmen einer voreingestellten Spannung (202a), die auf das elastische Element (8) als eine Funktion der Ablegezeit anzubringen ist;
- Berechnen des zweiten Parameters (P2) als eine Funktion der voreingestellten Spannung (202a).

3. Verfahren nach Anspruch 1 oder 2, bei dem die Drehgeschwindigkeit der Regelungsrolle (400) proportional zu dem ersten Parameter (P1) aufgrund eines vorher festgelegten Koeffizienten berechnet wird.

4. Verfahren nach Anspruch 3, bei dem der vorher festgelegte Koeffizient eine Funktion des zweiten Parameters (P2) ist.

5. Verfahren nach einem der vorhergehenden Ansprüche, ferner mit folgenden Schritten:

- Detektieren einer Spannung (201a) des elastischen Elements (8) zwischen der Regelungsrolle (400) und der Formungstrommel (50);
- Einstellen der Drehgeschwindigkeit der Regelungsrolle (400) auch als eine Funktion der detektierten Spannung (201a).

6. Verfahren nach Anspruch 5, ferner mit folgenden Schritten:

- Vergleichen der detektierten Spannung (201a) mit einer voreingestellten Spannung (202a), die als eine Funktion der Ablegezeit bestimmt wurde;
- Bestimmen eines dritten Parameters (P3) als eine Funktion des Vergleichs;

- Bestimmen des zweiten Parameters (P2) als eine Funktion des dritten Parameters (P3).

7. Verfahren nach einem der vorhergehenden Ansprüche, bei dem der Schritt des Bestimmens des ersten Parameters (P1) einen Unterschritt des Detektierens der Ablegegeschwindigkeit aufweist.

8. Verfahren nach einem der vorhergehenden Ansprüche, bei dem das elastische Element (8) um die Formungstrommel (50) herum während eines Spiralschritts von null Grad abgelegt wird.

9. Verfahren nach Anspruch 8, bei dem der erste Parameter (P1) für eine Spiralgeschwindigkeit repräsentativ ist, mit der das elastische Element (8) um die Formungstrommel (50) herumgewickelt wird.

10. Verfahren zum Herstellen von Reifen für Fahrzeuge mit wenigstens den folgenden Schritten:

- Ausbilden einer Karkassenstruktur (2);
- Zuordnen der Karkassenstruktur (2) zu einer Gürtelstruktur (3);
- Zuordnen eines Lauffächenbands (4) zu der Karkassenstruktur (3) an einer radial äußeren Position, wobei jeder dieser Schritte aufweist:
- Ablegen wenigstens eines elastischen Elements (8) an einer in Bezug auf eine Formungstrommel (50) radial äußeren Position durch Ausführen des Verfahrens nach einem der Ansprüche 1 bis 9.

11. Verfahren nach Anspruch 10, bei dem während des Schritts des Ausbildens der Gürtelstruktur (3) das elastische Element (8) um die Formungstrommel (50) herum abgelegt wird.

12. Verfahren nach Anspruch 10 oder 11, bei dem:

- die Karkassenstruktur (2) auf einer Haupttrommel ausgebildet wird;
- die Gürtelstruktur (3) auf einer Hilfstrommel ausgebildet wird, die von der Formungstrommel (50) definiert wird.

13. Verfahren nach Anspruch 10 oder 11, bei dem die Formungstrommel (50) eine im Wesentlichen ringförmige Formungstrommel ist.

14. Vorrichtung zum Ablegen wenigstens eines elastischen Elements in einem Verfahren zum Herstellen von Reifen für Fahrzeuge, die Vorrichtung mit:

- einem ersten Verarbeitungsmodul (100) zum Bestimmen eines ersten Parameters (P1), der für eine Ablegegeschwindigkeit repräsentativ ist, mit der wenigstens ein elastisches Element (8) um eine Formungstrommel (50) herum abgelegt wird;
- einem zweiten Verarbeitungsmodul (200) zum Bestimmen eines zweiten Parameters (P2), der für eine prozentuale Verlängerung repräsentativ ist, die auf das elastische Element (8) anzubringen ist;
- einer Regelungsrolle (400), die der Formungstrommel (50) vorgelagert angeordnet ist und eine radial äußere Oberfläche (400a) aufweist, die wenigstens teilweise im Eingriff mit dem elastischen Element (8) ist;
- einem Einstellmodul (300), das operativ der Regelungsrolle (400) zugeordnet ist, um als eine Funktion des ersten und zweiten Parameters (P1, P2) eine Drehgeschwindigkeit der Regelungsrolle (400) einzustellen, um das Ablegeprofil des wenigstens einen elastischen Elements (8) zu regeln.

15. Vorrichtung nach Anspruch 14, bei der das zweite Verarbeitungsmodul (200) den zweiten Parameter (P2) aufgrund einer voreingestellten Spannung (202a) berechnet, die auf das elastische Element (8) anzubringen ist, die als eine Funktion der Ablegezeit definiert ist.

16. Vorrichtung nach Anspruch 14 oder 15, bei der das Einstellmodul (300) die Drehgeschwindigkeit der Regelungsrolle (400) proportional zu dem ersten Parameter (P1) aufgrund eines vorher festgelegten Koeffizienten bestimmt.

17. Vorrichtung nach Anspruch 16, bei welcher der vorher festgelegte Koeffizient eine Funktion des zweiten Parameters (P2) ist.

18. Vorrichtung nach einem der Ansprüche 14 bis 17, ferner mit:

- einem Hauptsensor (201), um eine Spannung (201a) des elastischen Elements (8) zwischen der Regelungsrolle (400) und der Formungstrommel (50) zu detektieren;
- wobei das Einstellmodul (300) dem Hauptsensor (201) operativ zugeordnet ist, um die Drehgeschwindigkeit der Regelungsrolle (400) auch als eine Funktion der detektierten Spannung (201a) einzustellen.

**19.** Vorrichtung nach Anspruch 18, ferner mit:

- einem Vergleichsmodul (203), das dem Hauptsensor (201) operativ zugeordnet ist, um die detektierte Spannung (201a) mit einer voreingestellten Spannung (202a) zu vergleichen, die als eine Funktion der Ablegezeit definiert ist und die durch eine Berechnung des Auswahlmoduls (202) bestimmt wird;
- wobei das zweite Verarbeitungsmodul (200) operativ dem Vergleichsmodul (202) zugeordnet ist, um einen dritten Parameter (P3) als eine Funktion des Vergleichs zu bestimmen;
- wobei das zweite Verarbeitungsmodul (200) den zweiten Parameter (P2) als eine Funktion des dritten Parameters (P3) bestimmt.

**20.** Vorrichtung nach einem der Ansprüche 14 bis 19, bei der das zweite Verarbeitungsmodul (100) einen Hilfssensor (101) zum Detektieren der Ablegegeschwindigkeit aufweist.

**21.** Vorrichtung nach einem der Ansprüche 14 bis 20, bei der das elastische Element um die Formungstrommel (50) herum in einem Spiralschritt von null Grad abgelegt wird.

**22.** Vorrichtung nach Anspruch 21, bei welcher der erste Parameter (P1) repräsentativ für eine Spiralgeschwindigkeit ist, mit der das elastische Element (8) um die Formungstrommel (50) herumgewickelt wird.

## Revendications

**1.** Méthode pour poser au moins un élément élastique dans un procédé de production de pneus pour véhicules, la méthode comportant les étapes suivantes:

- déterminer un premier paramètre (P1) représentatif d'une vitesse de pose à laquelle au moins un élément élastique (8) est posé autour d'un tambour de formage (50) d'un pneu (1) ;
- déterminer un deuxième paramètre (P2) représentatif d'un pourcentage d'allongement à appliquer à cet élément élastique (8) ;
- ajuster en fonction des premier et deuxième paramètres (P1, P2), une vitesse de rotation d'un rouleau de contrôle (400) positionné en amont dudit tambour de formage (50) et ayant un surface radialement externe (400a) au moins partiellement en prise avec l'élément élastique (8), pour contrôler le profil de pose de l'au moins un élément élastique (8).

**2.** Méthode selon la revendication 1, dans laquelle l'étape de déterminer le deuxième paramètre (P2) comporte les sous-étapes suivantes:

- déterminer une tension prédéterminée (202a) à appliquer à l'élément élastique (8), en fonction du temps de pose ;
- calculer le deuxième paramètre (P2) en fonction de la tension prédéterminée (202a).

**3.** Méthode selon la revendication 1 ou 2, dans laquelle la vitesse de rotation du rouleau de contrôle (400) est calculée en proportion du premier paramètre (P1), sur la base d'un coefficient prédéterminé.

**4.** Méthode selon la revendication 3, dans laquelle le coefficient prédéterminé est une fonction du deuxième paramètre (P2).

**5.** Méthode selon l'une quelconque des revendications précédentes, comportant en outre les étapes suivantes:

- détecter une tension (201a) de l'élément élastique (8) entre le rouleau de contrôle (400) et le tambour de formage (50) ;
- ajuster la vitesse de rotation du rouleau de contrôle (400) également en fonction de la tension détectée (201a).

**6.** Méthode selon la revendication 5, comportant en outre les étapes suivantes:

- comparer la tension détectée (201a) avec une tension prédéterminée (202a) déterminée en fonction du temps de pose ;
- déterminer un troisième paramètre (P3) en fonction de ladite comparaison ;
- déterminer le deuxième paramètre (P2) en fonction du troisième paramètre (P3).

7. Méthode selon l'une quelconque des revendications précédentes, dans laquelle l'étape de déterminer le premier paramètre (P1) comporte une sous-étape de détection de la vitesse de pose.

8. Méthode selon l'une quelconque des revendications précédentes, dans laquelle l'élément élastique (8) est posé autour du tambour de formage (50) lors d'une étape de spiralage à zéro degré.

9. Méthode selon la revendication 8, dans laquelle le premier paramètre (P1) est représentatif d'une vitesse de spiralage à laquelle l'élément élastique (8) est enroulé autour du tambour de formage (50).

10. Procédé de production de pneus pour véhicules, comportant au moins les étapes suivantes:

- fabriquer une structure de carcasse (2) ;
- associer la structure de carcasse (2) à une structure de ceinture (3) ;
- associer une bande de roulement (4) à la structure de ceinture (3), en une position radialement externe ;

dans laquelle l'une quelconque desdites étapes comporte :

- poser au moins un élément élastique (8) en une position radialement externe d'un tambour de formage (50) en effectuant la méthode selon l'une quelconque des revendications 1 à 9.

11. Procédé selon la revendication 10, dans lequel pendant l'étape de fabrication de la structure de ceinture (3), l'élément élastique (8) est posé autour du tambour de formage (50).

12. Procédé selon la revendication 10 ou 11, dans lequel :

- la structure de carcasse (2) est fabriquée sur un tambour principal ;
- la structure de ceinture (3) est fabriquée sur un tambour auxiliaire défini par le tambour de formage (50).

13. Procédé selon la revendication 10 ou 11, dans lequel le tambour de formage (50) est un tambour de formage sensiblement toroïdal.

14. Appareil pour poser au moins un élément élastique dans un procédé de production de pneus pour véhicules, l'appareil comportant :

- un premier module de traitement (100) pour déterminer un premier paramètre (P1) représentatif d'une vitesse de pose à laquelle au moins un élément élastique (8) est posé autour d'un tambour de formage (50) ;
- un deuxième module de traitement (200) pour déterminer un deuxième paramètre (P2) représentatif d'un pourcentage d'allongement à appliquer à l'élément élastique (8) ;
- un rouleau de contrôle (400) positionné en amont du tambour de formage (50) et ayant une surface radialement externe (400a) au moins partiellement en prise avec l'élément élastique (8) ;
- un module de réglage (300) fonctionnellement associé au rouleau de contrôle (400) pour ajuster, en fonction des premier et deuxième paramètres (P1, P2), une vitesse de rotation du rouleau de contrôle (400) pour contrôler le profil de pose de l'au moins un élément élastique (8).

15. Appareil selon la revendication 14, dans lequel le deuxième module de traitement (200) calcule le deuxième paramètre (P2) en fonction d'une tension prédéterminée (202a) à appliquer à l'élément élastique (8), qui est définie en fonction du temps de pose.

16. Appareil selon la revendication 14 ou 15, dans lequel le module de réglage (300) détermine la vitesse de rotation du rouleau de contrôle (400) en proportion du premier paramètre (P1), à partir d'un coefficient prédéterminé.

17. Appareil selon la revendication 16, dans lequel le coefficient prédéterminé est une fonction du deuxième paramètre (P2).

**18.** Appareil selon l'une quelconque des revendications 14 à 17, comportant en outre :

- un capteur principal (201) pour détecter une tension (201a) de l'élément élastique (8) entre le rouleau de contrôle (400) et le tambour de formage (50) ;
- le module d'ajustage (300) étant fonctionnellement associé avec le capteur principal (201) pour ajuster la vitesse de rotation du rouleau de contrôle (400) également en fonction de la tension détectée (201a).

**19.** Appareil selon la revendication 18, comportant en outre :

- un module de comparaison (203) fonctionnellement associé avec le capteur principal (201) pour comparer la tension détectée (201a) avec une tension prédéterminée (202a) définie en fonction du temps de pose, et déterminée par un module de calcul ou de sélection (202) ;
- le deuxième module de traitement (200) étant fonctionnellement associé avec le module de comparaison (203) pour déterminer un troisième paramètre (P3) en fonction de la comparaison ;
- le deuxième module de traitement (200) déterminant le deuxième paramètre (P2) en fonction du troisième paramètre (P3).

**20.** Appareil selon l'une quelconque des revendications 14 à 19, dans lequel le premier module de traitement (100) comporte un capteur auxiliaire (101) pour la détection de la vitesse de pose.

**21.** Appareil selon l'une quelconque des revendications 14 à 20, dans lequel l'élément élastique (8) est posé autour du tambour de formage (50) dans une étape de spiralage à zéro degré.

**22.** Appareil selon la revendication 21 dans lequel le premier paramètre (P1) est représentatif d'une vitesse de spiralage à laquelle l'élément élastique (8) est enroulé autour de la tambour de formage (50).

FIG 1

EP 2 150 400 B1

FIG 2

FIG 3

FIG 4

EP 2 150 400 B1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9113195 A
- WO 9210419 A
- DE 10347327
- EP 0344928 A
- US 2001008158 A
- JP 2006069085 B
- US 20030213863 A
- EP 0928680 B1
- EP 0928702 B1